# EUROPÄISCHE PATENTSCHRIFT

(11) **EP 1 826 235 B1**
(45) Veröffentlichungstag und Bekanntmachung des Hinweises auf die Patenterteilung: **05.08.2009**
(21) Anmeldenummer: 07003408.7
(22) Anmeldetag: 19.02.2007
(51) Int. Cl.: C08K 5/20, C08L 91/06

(54) **Wachszusammensetzung und deren Verwendung**
Wax compound and its application
Composition de cire et son utilisation

(30) Priorität: 28.02.2006 DE 102006009097
(43) Veröffentlichungstag der Anmeldung: 29.08.2007
(73) Patentinhaber: Clariant Finance (BVI) Limited, Road Town, Tortola (VG)
(72) Erfinder: Heinrichs, Franz-Leo, Dr., 86456 Gablingen (DE)
(74) Vertreter: Jacobi, Carola

(56) Entgegenhaltungen:
- EP-A1- 0 845 492
- WO-A-03/104318
- US-A- 5 810 919

## Beschreibung

Die Erfindung betrifft eine Wachszusammensetzung aus wenigstens drei Komponenten und deren Verwendung als Additiv in der Kunststoffverarbeitung, als Mattierungsmittel, als Rheologiemittel, als Slipadditiv oder zur Herstellung von Dispersionen. Die in der Wachszusammensetzung enthaltenen Komponenten sind ausgewählt aus der Gruppe der Amidwachse.

Konventionelle Kunststoffe wie PVC oder Styrol, aber auch technische Thermoplaste wie Polyamid, Polycarbonat, Polyalkylenterephthalat, Polyoxymethylen, Polyphenylenoxid oder thermoplastisches Polyurethan, werden in großem Umfang nach der Technik des Spritzgießens verarbeitet. Das ist der Grund, warum bei der Prozessoptimierung das sog. Formtrennverhalten und das Fließverhalten der betreffenden Kunststoffe eine besondere Rolle spielt. Zum Einstellen dieser Merkmale werden den Kunststoffen in geringen Mengen externe Verarbeitungshilfsmittel zugesetzt. Bei solchen Verarbeitungshilfsmitteln kommt es in aller Regel sowohl auf die Wirkung nach Innen als auch auf die Wirkung nach Außen an.

Für die Wirkung nach Innen, wie das Steuern von Rheologieeigenschaften der Schmelze, das Reduzieren der Friktion, das Dispergieren von Zusatzstoffen und Farbmitteln, werden mit dem Polymer gut verträgliche Substanzen benötigt. Für die Wirkung nach Außen, zum Beispiel als Gleit- und Trennmittel, werden hingegen mit dem Polymer mehr oder weniger unverträgliche Substanzen benötigt. Außerdem muss berücksichtigt werden, dass vor allem technische Thermoplaste wegen ihrer chemischen Struktur gegen Hydrolyse empfindlich sind und dass deshalb saure oder basische Zusatzstoffe bei diesen Thermoplasten zu unkontrollierten Nebenreaktionen führen und schon allein aus diesem Grund als Verarbeitungshilfsmittel nicht geeignet sind.

Diese vielfältigen, komplexen und oft gegensätzlichen Anforderungen an optimale Verarbeitungshilfsmittel erfüllen nur eine ganz kleine Gruppe von Substanzen. Dazu gehören Fettsäurederivate, Wachse, mit Einschränkungen Metallseifen, Polyester oder Amide. Aber selbst bei diesen Substanzen treten immer wieder von Fall zu Fall Nachteile auf, die in Abwesenheit einer besser brauchbaren Alternative akzeptiert werden müssen.

Fettsäuren sind zwar hervorragende Verarbeitungshilfsmittel, sie unterstützen aber den Polymerabbau und sind bei den oft hohen Verarbeitungstemperaturen der Kunststoffe beim Spritzgießen flüchtig und rauchen ab. Seifen können sich in Gegenwart saurer Bestandteile leicht zersetzen und verhalten sich dann genauso wie Fettsäuren. Fettsäureester sind oft zu polar und zeigen in polaren Kunststoffen nur Wirkung nach Innen, während in unpolaren Kunststoffen starke Tendenz zur Migration beobachtet wird. Ähnlich wie die Fettsäureester verhalten sich die Amide von Stearinsäure, Erucasäure oder Ölsäure.

Die Tendenz bei der Verbesserung von Rezepturen beim Spritzgießen geht daher bevorzugt zu längerkettigen Verbindungen, wie sie z. B. auf der Basis von Montanwachsäure und deren Derivaten zugänglich sind, oder zu Umsetzungsprodukten von langkettigen Fettsäuren mit Diaminen. Stand der Technik ist die Verwendung von Umsetzungsprodukten der Stearinsäure oder der Palmitinsäure mit Ethylendiamin. Dabei ist es aber bisher noch nicht gelungen, die optimale Balance zwischen der Wirkung nach Innen und der Wirkung nach Außen zu finden.

Es bestand daher die Aufgabe, ein geeignetes Verarbeitungshilfsmittel für Kunststoffe beim Spritzgießen zu finden, das einerseits ausreichende Wirkung nach Innen bietet, das gleichzeitig aber auch gute Gleit- und Trennwirkung an der Oberfläche des Kunststoffs zeigt, ohne dabei durch zu starke Migration eine weitere Behandlung der Kunststoffoberfläche zu behindern oder unmöglich zu machen.

Überraschend wurde gefunden, dass diese Aufgabe durch die Verwendung einer speziellen Kombination von Amidwachsen als Komponenten einer Wachszusammensetzung gelöst werden kann. Der Begriff "Amidwachse" soll definitionsgemäß als Sammelbezeichnung für eine Produktgruppe zu verstehen sein, die das Ergebnis der Umsetzung einer langkettigen Carbonsäure mit einem mono-oder mehrfach funktionellen Amin oder mit Ammoniak ist.

Gelöst wird die Aufgabe erfindungsgemäß durch eine Wachszusammensetzung der eingangs genannten Art, die eine Kombination aus wenigstens drei Amidwachsen A, B und C enthält und deren Kennzeichenmerkmal darin zu sehen ist, dass
- Amidwachs A das Umsetzungsprodukt von Alkylendiamin mit linearen Fettsäuren oder mit Mischungen aus Fettsäuren darstellt,
- Amidwachs B das Umsetzungsprodukt von Alkylendiamin mit 12-Hydroxystearinsäure und
- Amidwachs C das Umsetzungsprodukt von Alkylendiamin mit 12-Hydroxystearinsäure und linearen Fettsäuren.

Technisch verfügbar sind Umsetzungsprodukte aus Ethylendiamin und Stearinsäure oder Palmitinsäure, Ölamid, Erucaamid, Stearylamid.

Bei der erfindungsgemäßen Wachszusammensetzung aus den Amidwachsen A, B und C, die sich überraschend als Verarbeitungshilfsmittel beim Spritzgießen von Kunststoffen mit optimierter Wirkung nach Innen und nach Außen eignen, werden dagegen drei unterschiedliche Komponenten A, B und C in geeigneter Menge miteinander kombiniert.

Bei Amidwachs A handelt es sich um Umsetzungsprodukte von Alkylendiamin, vorzugsweise von Ethylendiamin, mit linearen Fettsäuren oder Mischungen von Fettsäuren wie vorzugsweise Talgfettsäure, Kokosfettsäure, Stearinsäure, Palmitinsäure, Behensäure oder Erucasäure mit der Struktur

CH₃-(CH₂)ₙ-CO-NH-CH₂CH₂-NH-CO-(CH₂)ₙ-CH₃

mit n = 6 bis 20.

Bei Amidwachs B handelt es sich um das Umsetzungsprodukt von Alkylendiamin, vorzugsweise von Ethylendiamin, mit 12-Hydroxystearinsäure, vorzugsweise mit folgender Zusammensetzung:

CH₃-(CH₂)₅-CHOH-(CH₂)₁₀CO-NH-CH₂CH₂-NH-CO-(CH₂)₁₀-CHOH-(CH₂)₅-CH₃

Bei Amidwachs C handelt es sich um das Umsetzungsprodukt von Alkylendiamin, vorzugsweise von Ethylendiamin, mit 12-Hydroxystearinsäure und linearen Fettsäuren, vorzugsweise der Struktur:

CH₃-(CH₂)₅-CHOH-(CH₂)₁₀CO-NH-CH₂CH₂-NH-CO-(CH₂)ₙ-CH₃

mit n = 6 bis 20.

Erfindungsgemäß enthält die Wachszusammensetzung bevorzugt Amidwachs A in einer Menge im Bereich von 1 bis 85 Gew.-%, Amidwachs B in einer Menge im Bereich von 1 bis 85 Gew.-% und Amidwachs C in einer Menge im Bereich von 1 bis 50 Gew.-%, jeweils bezogen auf das Gesamtgewicht der Wachszusammensetzung.

In einer besonders bevorzugten Ausführungsform der Erfindung enthält die Wachszusammensetzung Amidwachs A in einer Menge im Bereich von 5 bis 75 Gew.-%, Amidwachs B in einer Menge im Bereich von 5 bis 75 Gew.-% und Amidwachs C in einer Menge im Bereich von 1 bis 40 Gew.-%, jeweils wieder bezogen auf das Gesamtgewicht der Wachszusammensetzung.

Die Umsetzung der Ausgangsstoffe mit Alkylendiamin, vorzugsweise mit Ethylendiamin, zum Herstellen der Amidwachse erfolgt bei Temperaturen oberhalb von 100°C. Insbesondere werden die Fettsäuremischungen in einen Reaktor gegeben und dort unter Schutzgas aufgeschmolzen. In die so erhaltene Schmelze wird bei Temperaturen um 140°C Ethylendiamin unter Rühren eindosiert. Nach Dosierung der nach der Stöchiometrie vorgegebenen Menge an Ethylendiamin wird die Temperatur weiter auf 190°C erhöht und unter Abdestillieren des Reaktionswassers weiter gerührt, bis die Säurezahl SZ und die Alkalizahl AZ beide unter den Wert von 6 abgesunken sind. Die Säurezahl SZ wird zur Kontrolle des Reaktionsverlaufs gemäß DIN EN ISO 3682 bestimmt, die Alkalizahl AZ nach der DGF Methode H III 2a (92).

Aus den Amidwachsen A, B und C der Herstellungsbeispiele werden dann durch Mischen die erfindungsgemäßen Wachszusammensetzungen hergestellt. Die genaue Zusammensetzung der Wachszusammensetzungen wird gaschromatographisch analysiert.

Überraschend wurde gefunden, dass sich die erfindungsgemäße Wachszusammensetzung enthaltend wenigstens die Amidwachse A, B und C als Verarbeitungshilfsmittel zum Spritzgießen für konventionelle Kunststoffe wie PVC oder Styrol oder für technische Thermoplaste wie Polyamid, Polycarbonat, Polyalkylenterephthalat, Polyoxymethylen, Polyphenylenoxid oder für thermoplastisches Polyurethan in besonderer Weise eignet. Die Wachszusammensetzung wird erfindungsgemäß den Kunststoffen als Verarbeitungshilfsmittel in Mengen im Bereich von 0,1 bis 10 Gew.-%, vorzugsweise von 0,2 bis 5 Gew.-%, besonders bevorzugt von 0,2 bis 2 Gew.-%, zugesetzt, jeweils bezogen auf das Gesamtgewicht aus Kunststoff plus Verarbeitungshilfsmittel.

Die erfindungsgemäßen Wachszusammensetzungen können als reine Substanzen verwendet oder mit aus dem Stand der Technik bekannten Mischungskomponenten wie Polyethylenwachsen, Polypropylenwachsen, Amidwachsen, Fischer-Tropsch Wachsen gemischt und anschließend mikronisiert werden. Die Partikelgröße wird dabei zweckmäßig im Bereich von 10 bis 20 µm eingestellt.

Die erfindungsgemäßen Wachszusammensetzungen können weiter auch in Lösemitteln heiß gelöst und durch Abkühlen gefällt werden. So hergestellte Pasten können in Druckanwendungen zur Steuerung der Viskosität und des Gleit- und Slipverhaltens eingesetzt werden.

Die Erfindung soll durch die nachfolgenden Ausführungsbeispiele für den Fachmann noch deutlicher erläutert werden. Alle Mengenangaben in Mischungen sind dabei als Angaben in Gew.-% zu verstehen, falls nichts anderes dazu angegeben ist. Dabei wurden zunächst folgende Amidwachse hergestellt:
Herstellbeispiel 1 für Amidwachs C:
   12-Hydroxystearinsäure 1,5 mol
   Talgfettsäure (35/65) 0,5 mol
   Ethylendiamin 1,0 mol
   AZ: 4,3 / SZ: 4,7
Herstellbeispiel 2 für Amidwachs C:
   12-Hydroxystearinsäure 1,0 mol
   Talgfettsäure (35/65) 1,0 mol
   Ethylendiamin 1,0 mol
   AZ: 4,9 / SZ: 4,9
Herstellbeispiel 3 für Amidwachs C:
   12-Hydroxystearinsäure 1,5 mol
   Talgfettsäure (45/55) 0,5 mol
   Ethylendiamin 1,0 mol
   AZ: 4,8 / SZ: 4,3
Herstellbeispiel 4 für Amidwachs A:
   Stearinsäure 0,5 mol
   Talgfettsäure (30/70) 1,5 mol
   Ethylendiamin 1,0 mol
   AZ: 4,1 / SZ: 4,5
Herstellbeispiel 5 für Amidwachs B:
   12-Hydroxystearinsäure 2,0 mol
   Ethylendiamin 1,0 mol
   AZ: 4,3 /SZ: 4,7
Vergleichsbeispiel nach dem Stand der Technik V1:
   Talgfettsäure (30/70) 2,0 mol
   Ethylendiamin 1,0 mol
   AZ: 5,1 /SZ: 4,8
Vergleichsbeispiel nach dem Stand der Technik V2:
   Stearinsäure rein 2,0 mol
   Ethylendiamin 1,0 mol
   AZ: 5,3 / SZ: 4,9

Aus den Amidwachsen A, B und C der Herstellungsbeispiele 1 bis 5 werden dann die Wachszusammensetzungen hergestellt. Die genaue Zusammensetzung der erfindungsgemäßen Wachszusammensetzungen wird mittels GC analysiert. Die gewichtsmäßige Zusammensetzung der erfindungsgemäßen Wachszusammensetzungen WZ1 bis WZ4 und der Vergleichsmischung V1 und V2 nach dem Stand der Technik sind in der nachfolgenden Tabelle aufgeführt. Diese wurden dann als Verarbeitungsmittel in technischen Kunststoffen und in mikronisierter Form als Additive in Lack geprüft.

| | WZ1 | WZ2 | WZ3 | WZ4 | V1 | V2 |
|---|---|---|---|---|---|---|
| C₁₆-EDA-C₁₆ | 7 | 3 | 11,5 | 7 | 9 | |
| C₁₆-EDA-C₁₈ | 25 | 11,5 | 28 | 31 | 42 | |
| C₁₆-EDA-C₁₈-OH | 13 | 17,5 | 17 | | | |
| C₁₈-EDA-C₁₈ | 24 | 10,5 | 17 | 37 | 49 | 100 |
| C₁₈-EDA-C₁₈-OH | 24 | 32,5 | 20,5 | | | |
| C₁₈-OH-EDA-C₁₈-OH | 7 | 25 | 6 | 25 | | |
| Summe | 100 | 100 | 100 | 100 | 100 | 100 |

### Thermoplastisches Polyurethan

Beim Herstellen von thermoplastischem Polyurethan (TPU) wurden in die Esterdiolkomponente die Wachszusammensetzungen in einer Menge von 0,4 Gew.-%, bezogen auf das Gewicht der Mischung aus Esterdiol und Wachszusammensetzung, eingesetzt.

Diese Mischung wurde mit Diisocyanaten zum Polyurethan umgesetzt. Aus den so hergestellten Polymeren wurden dann Spritzgussteile hergestellt. Bewertet wurden die Formtrennung und das Migrationsverhalten bei Raumtemperatur, bei 60 und bei 80°C nach Schulnoten.

Geprüft wurden die erfindungsgemäßen Produkte, die Wachszusammensetzungen WZ1 bis WZ4 enthalten, die Vergleichsmischung 1 und das reine EBS V2, dazu noch ein marktübliches Derivat von Montanwachssäure. Die Daten zeigten, dass mit den erfindungsgemäßen Produkten bei ausreichender Entformungskraft das Migrationsverhalten signifikant verbessert werden kann.

### Performance in thermoplastischem Polyurethan:

| | WZ1 | WZ2 | WZ3 | WZ4 | V1 | V2 | Montanwachsderivat |
|---|---|---|---|---|---|---|---|
| Entformung | 1,6 | 1,9 | 1,5 | 1,8 | 1,5 | 2,9 | 3 |
| Migration 23°C | 2,5 | 1,5 | 2,5 | | 3,5 | 3 | 1,5 |
| Migration 60°C | 3 | 1,5 | 2,5 | 3 | 2,5 | 3 | 1,5 |
| Migration 80°C | 3 | 4 | 3 | 3 | 6 | 6 | 1,5 |

### Einsatz in Polystyrol

Geprüft wurde das Spritzgussverhalten von Polystyrol in Kombination mit den erfindungsgemäßen Wachszusammensetzungen im Verhältnis 95/5, 90/10 und 85/15. Zum Vergleich wurden reines Polystyrol und die Kombinationen mit den Substanzen nach dem Stand der Technik getestet. Gemessen wurde die Trennkraft in Newton, die Fließstrecke in der Messspirale in cm, Farbe, Transparenz, Ausblühen und Gleitwirkung wurden gegen Standard mit Schulnotenverfahren bewertet.

Als Vergleich wurden handelsübliche Produkte eingesetzt. V1 ist Hostalub FA 1 und V3 ist Hostalub FA 5. Die Versuche zeigten, dass bei gleich bleibender Entformungskraft das Fließverhalten und das Migrationsverhalten durch die erfindungsgemäßen Wachszusammensetzungen verbessert wurden. Auch bei höheren Dosierungen verblieben die erfindungsgemäßen Produkte in der Matrix und schwitzten nicht aus.

Anwendungsprüfung in Polystyrol, 95/05

| | Styrol | V1 | V3 | WZ1 | WZ2 | Einheit |
|---|---|---|---|---|---|---|
| Ausblühen | - | 3 | 3 | 2 | 2 | - |
| Farbe | 1 | 2 | 4 | 2 | 2 | - |
| Fließverhalten | 63 | 63 | 63 | 64 | 64 | cm |
| Gleitwirkung | - | 2 | 2 | 2 | 2 | - |
| Mischung 85/15 | | 3 | 4 | 2 | 2 | |
| Mischung 90/15 | | 3 | 3 | 2 | 2 | |
| Mischung 95/05 | | 2 | 2 | 2 | 2 | |
| Transparenz | 1 | 2 | 3 | 2-3 | 2-3 | - |
| Trennwirkung | 1772 | 1585 | 1605 | 1557 | 1592 | N |

### Einsatz in PVC

Die erfindungsgemäßen Mischungen wurden auch in PVC gegen Standardamidwachse und Montanwachsderivate geprüft.

### Als Prüfrezeptur wurde folgende Mischung eingesetzt:

Vinnolit S 3160, PVC der Vinnolit, 100 Teile, Mark 17 MOK 1,5 Teile, Kane ABE-58A 5 Teile, Paraloid K 120 N 1 Teil, Loxiol G 16 0,3 Teile, Testprodukt oder Vergleichsprodukt 0,4 Teile.
V1 = Amidwachs Hostalub FA1, V3 = Amidwachs Hostalub FA 5

Bei Trenn- und Gleitwirkung verhielten sich die erfindungsgemäßen Produkte wie der Standard, bei der Farbe waren sie schlechter, im Ausblühverhalten waren sie besser als die Produkte nach dem Stand der Technik.

Anwendungsprüfung in PVC

| | V1 | V3 | WZ1 | WZ2 |
|---|---|---|---|---|
| Trennwirkung | 3 | 3 | 3 | 3 |
| Farbe | 1 | 2 | 4 | 3 |
| Transparenz | 90,0 % | 90,0 % | 90,0 % | 90,0 % |
| Ausblühen | 3 | 3 | 2 | 2 |
| Gleitwirkung | 3 | 3 | 3 | 3 |

### Einsatz in Polcarbonat

Geprüft wurde die Wirkung in einer Prüfrezeptur aus Makrolon 3108, 100 Teile, Wachszusammensetzung/Vergleichsprodukt 0,5 Teile. Geprüft wurden die Mischungen WZ1 und WZ2 gegen Licolub FA1 und Licolub FA 5. Untersucht wurden Farbe, Transparenz, Trennwirkung und Schmelzindex.

### Versuchsergebnisse Polycarbonat:

Ergebnisse Wachszusammensetzungen aus Amidwachsen in Polycarbonat

| Polycarbonat | Makrolon M 3108 | | | | | |
|---|---|---|---|---|---|---|
| VN | Wachs | Menge [Gew.-%] | Entformungskraft [N] | MVR 275°C/5 kg [cm³/10 min] | Yellowness- Index | Transparenz [%] |
| 91463 | - | | 1800 | 12,5 | 2,33 | 88,8 |
| 91464 | Licolub FA 1 | 1 | 1700 | 17,4 | 2,15 | 88,9 |
| 91465 | Licolub FA 5 | 1 | 1700 | 13 | 2,45 | 88,9 |
| 91466 | FHG 514 | 1 | 1600 | 16,3 | 2,47 | 88,9 |
| 91467 | FHG 515 | 1 | 1600 | 15 | 2,46 | 88,9 |
| 91468 | Licolub FA 1 | 1,5 | 1300 | 24,6 | 1,92 | 89,3 |
| 91469 | Licolub FA 5 | 1,5 | 1500 | 15,1 | 2,38 | 88,9 |
| 91470 | FHG 514 | 1,5 | 1600 | 23,4 | 2,08 | 89,2 |
| 91471 | FHG 515 | 1,5 | 1600 | 20,6 | 1,76 | 89,4 |

| | | | | | | |
|---|---|---|---|---|---|---|
| FA 5 = Umsetzungsprodukt aus Hydroxystearinsäure und Talgamin, FA 1 = Umsetzungsprodukt aus Stearinsäure und Ethylendiamin, FHG 515 = Mischung 2 (= WZ2) der Beispiele FHG 514 = Mischung 1 (= WZ1) der Beispiele | | | | | | |

Die Tabelle zeigt, dass die erfindungsgemäßen Wachszusammensetzungen mit Polycarbonat gut verträglich sind und auch bei höheren Dosierungen in der Matrix verbleiben. In der äußerlichen Wirkung, Entformungskraft, tritt keine Zunahme auf.

## Patentansprüche

1. Wachszusammensetzung enthaltend wenigstens drei Amidwachse A, B und C, **dadurch gekennzeichnet, dass**
- Amidwachs A das Umsetzungsprodukt von Alkylendiamin mit linearen Fettsäuren oder mit Mischungen aus Fettsäuren darstellt,
- Amidwachs B das Umsetzungsprodukt von Alkylendiamin mit 12-Hydroxystearinsäure und
- Amidwachs C das Umsetzungsprodukt von Alkylendiamin mit 12-Hydroxystearinsäure und linearen Fettsäuren.

2. Wachszusammensetzung nach Anspruch 1, **dadurch gekennzeichnet, dass** Amidwachs A das Umsetzungsprodukt darstellt von Ethylendiamin mit linearen Fettsäuren oder mit Mischungen von Fettsäuren ohne zusätzliche funktionelle Gruppen.

3. Wachszusammensetzung nach Anspruch 2, **dadurch gekennzeichnet, dass** als Fettsäuren ohne zusätzliche funktionelle Gruppen zur Herstellung von Amidwachs A Talgfettsäure, Kokosfettsäure, Stearinsäure, Palmitinsäure, Behensäure oder Erucasäure mit der Struktur
CH₃-(CH₂)ₙ-CO-NH-CH₂CH₂-NH-CO-(CH₂)ₙ-CH₃
mit n = 6 bis 20 eingesetzt werden.

4. Wachszusammensetzung nach Anspruch 1, **dadurch gekennzeichnet, dass** Amidwachs B das Umsetzungsprodukt darstellt von Ethylendiamin mit 12-Hydroxystearinsäure mit der Struktur
CH₃-(CH₂)₅-CHOH-(CH₂)₁₀CO-NH-CH₂CH₂-NH-CO-(CH₂)₁₀ -CHOH-(CH₂)₅-CH₃

5. Wachszusammensetzung nach Anspruch 1, **dadurch gekennzeichnet, dass** Amidwachs C das Umsetzungsprodukt darstellt von Ethylendiamin mit 12-Hydroxystearinsäure und linearen Fettsäuren der Struktur
CH₃-(CH₂)₅-CHOH-(CH₂)₁₀CO-NH-CH₂CH₂-NH-CO-(CH₂)ₙ-CH₃
mit n = 6 bis 20.

6. Wachszusammensetzung nach einem oder nach mehreren der Ansprüche 1 bis 5, **dadurch gekennzeichnet, dass** sie Amidwachs A in einer Menge im Bereich von 1 bis 85 Gew.-% enthält, Amidwachs B in einer Menge im Bereich von 1 bis 85 Gew.-% und Amidwachs C in einer Menge im Bereich von 1 bis 50 Gew.-%, jeweils bezogen auf das Gesamtgewicht der Wachszusammensetzung.

7. Wachszusammensetzung nach einem oder nach mehreren der Ansprüche 1 bis 6, **dadurch gekennzeichnet, dass** sie Amidwachs A in einer Menge im Bereich von 5 bis 75 Gew.-% enthält, Amidwachs B in einer Menge im Bereich von 5 bis 75 Gew.-% und Amidwachs C in einer Menge im Bereich von 1 bis 40 Gew.-%, jeweils bezogen auf das Gesamtgewicht der Wachszusammensetzung.

8. Verwendung einer Wachszusammensetzung nach einem oder nach mehreren der Ansprüche 1 bis 6 als Verarbeitungshilfsmittel in Thermoplasten.

9. Verwendung nach Anspruch 8, **dadurch gekennzeichnet, dass** die Thermoplaste ausgewählt sind aus der Gruppe enthaltend PVC, Polystyrol, Polyamid, Polycarbonat, Polyalkylenterephthalat, Polyoxymethylen, Polyphenylenoxid oder thermoplastisches Polyurethan und dass die Wachszusammensetzung in den Kunststoffen in Mengen im Bereich von 0,1 bis 10 Gew.-% eingesetzt wird, bezogen auf das Gesamtgewicht aus Kunststoff plus Verarbeitungshilfsmittel.

10. Verwendung einer Wachszusammensetzung nach einem oder nach mehreren der Ansprüche 1 bis 7 zum Herstellen von Wachspasten auf Lösemittelbasis und Verwendung solcher Pasten in Druckanwendungen.

11. Verwendung einer Wachszusammensetzung nach einem oder nach mehreren der Ansprüche 1 bis 7 zum Herstellen von Wachsmikronisaten allein oder zusammen mit anderen mahlbaren Wachsen und Verwendung dieser Mikronisate in Lacken.

12. Verwendung einer Wachszusammensetzung nach einem oder nach mehreren der Ansprüche 1 bis 7 zum Herstellen von wässrigen Dispersionen.

## Claims

1. A wax composition comprising at least three amide waxes A, B, and C, wherein
- amide wax A is the reaction product of alkylenediamine with linear fatty acids or with mixtures composed of fatty acids,
- amide wax B is the reaction product of alkylenediamine with 12-hydroxystearic acid, and
- amide wax C is the reaction product of alkylenediamine with 12-hydroxystearic acid and with linear fatty acids.

2. The wax composition as claimed in claim 1, wherein amide wax A is the reaction product of ethylenediamine with linear fatty acids or with mixtures of fatty acids without additional functional groups.

3. The wax composition as claimed in claim 2, wherein the fatty acids not having additional functional groups and used for preparing amide wax A comprise tallow fatty acid, coconut fatty acid, stearic acid, palmitic acid, behenic acid, or erucic acid, having the structure
CH₃-(CH₂)ₙ-CO-NH-CH₂CH₂-NH-CO-(CH₂)ₙ-CH₃
where n = from 6 to 20.

4. The wax composition as claimed in claim 1, wherein amide wax B is the reaction product of ethylenediamine with 12-hydroxystearic acid, having the structure
CH₃-(CH₂)₅-CHOH-(CH₂)₁₀CO-NH-CH₂CH₂-NH-CO-(CH₂)₁₀ -CHOH-(CH₂)₅-CH₃

5. The wax composition as claimed in claim 1, wherein amide wax C is the reaction product of ethylenediamine with 12-hydroxystearic acid and with linear fatty acids, having the structure
CH₃-(CH₂)₅-CHOH-(CH₂)₁₀CO-NH-CH₂CH₂-NH-CO-(CH₂)ₙ-CH₃
where n = from 6 to 20.

6. The wax composition as claimed in one or more of claims 1 to 5, which comprises an amount in the range from 1 to 85% by weight of amide wax A, an amount in the range from 1 to 85% by weight of amide wax B, and an amount in the range from 1 to 50% by weight of amide wax C, based in each case on the total weight of the wax composition.

7. The wax composition as claimed in one or more of claims 1 to 6, which comprises an amount in the range from 5 to 75% by weight of amide wax A, an amount in the range from 5 to 75% by weight of amide wax B, and an amount in the range from 1 to 40% by weight of amide wax C, based in each case on the total weight of the wax composition.

8. The use of a wax composition as claimed in one or more of claims 1 to 6 as processing aid in thermoplastics.

9. The use as claimed in claim 8, wherein the thermoplastics have been selected from the group consisting of PVC, polystyrene, polyamide, polycarbonate, polyalkylene terephthalate, polyoxymethylene, polyphenylene oxide, or thermoplastic polyurethane, and wherein the amounts used of the wax composition in the plastics are in the range from 0.1 to 10% by weight, based on the total weight of plastic plus processing aid.

10. The use of a wax composition as claimed in one or more of claims 1 to 7 for the preparation of solvent-based wax pastes and the use of such pastes in paint applications.

11. The use of a wax composition as claimed in one or more of claims 1 to 7 for the preparation of wax micronizates alone or together with other millable waxes and the use of said micronizates in coatings.

12. The use of a wax composition as claimed in one or more of claims 1 to 7 for the preparation of aqueous dispersions.

## Revendications

1. Composition de cire, contenant au moins trois cires d'amide A, B et C, **caractérisée en ce que**
- la cire d'amide A représente le produit de réaction d'alkylènediamine avec des acides gras linéaires ou avec des mélanges d'acides gras,
- la cire d'amide B représente le produit de réaction d'alkylènediamine avec l'acide 12-hydroxystéarique et
- la cire d'amide C représente le produit de réaction d'alkylènediamine avec l'acide 12-hydroxystéarique et des acides gras linéaires.

2. Composition de cire selon la revendication 1, **caractérisée en ce que** la cire d'amide A représente le produit de réaction d'éthylènediamine avec des acides gras linéaires ou avec des mélanges d'acides gras sans groupes fonctionnels supplémentaires.

3. Composition de cire selon la revendication 2, **caractérisée en ce qu'**on utilise en tant qu'acides gras sans groupes fonctionnels supplémentaires pour la préparation de la cire d'amide A l'acide gras de suif, l'acide gras de coco, l'acide stéarique, l'acide palmitique, l'acide béhénique ou l'acide érucique de structure
CH₃-(CH₂)ₙ-CO-NH-CH₂CH₂-NH-CO-(CH₂)ₙ-CH₃
où n = 6 à 20.

4. Composition de cire selon la revendication 1, **caractérisée en ce que** la cire d'amide B représente le produit de réaction d'éthylènediamine avec l'acide 12-hydroxystéarique de structure
CH₃-(CH₂)₅-CHOH-(CH₂)₁₀CO-NH-CH₂CH₂-NH-CO-(CH₂)₁₀-CHOH-(CH₂)₅-CH₃.

5. Composition de cire selon la revendication 1, **caractérisée en ce que** la cire d'amide C représente le produit de réaction d'éthylènediamine avec l'acide 12-hydroxystéarique et des acides gras linéaires de structure
CH₃-(CH₂)₅-CHOH-(CH₂)₁₀CO-NH-CH₂CH₂-NH-CO-(CH₂)ₙ-CH₃
où n = 6 à 20.

6. Composition de cire selon une ou plusieurs des revendications 1 à 5, **caractérisée en ce qu'**elle contient la cire d'amide A en une quantité dans la plage de 1 à 85 % en poids, la cire d'amide B en une quantité dans la plage de 1 à 85 % en poids et la cire d'amide C en une quantité dans la plage de 1 à 50 % en poids, chaque fois par rapport au poids total de la composition de cire.

7. Composition de cire selon une ou plusieurs des revendications 1 à 6, **caractérisée en ce qu'**elle contient la cire d'amide A en une quantité dans la plage de 5 à 75 % en poids, la cire d'amide B en une quantité dans la plage de 5 à 75 % en poids et la cire d'amide C en une quantité dans la plage de 1 à 40 % en poids, chaque fois par rapport au poids total de la composition de cire.

8. Utilisation d'une composition de cire selon une ou plusieurs des revendications 1 à 6, en tant qu'adjuvant de processus dans des matières thermoplastiques.

9. Utilisation selon la revendication 8, **caractérisée en ce que** les matières thermoplastiques sont choisies dans le groupe contenant le PVC, le polystyrène, le polyamide, le polycarbonate, un poly(alkylène-téréphtalate), le polyoxyméthylène, le polyoxyphénylène ou le polyuréthanne thermoplastique et **en ce que** la composition de cire est utilisée dans les matières plastiques en quantités dans la plage de 0,1 à 10 % en poids, par rapport au poids total de matière plastique plus adjuvant de processus.

10. Utilisation d'une composition de cire selon une ou plusieurs des revendications 1 à 7, pour la préparation de pâtes de cires à base de solvant et utilisation de telles pâtes dans des applications d'imprimerie.

11. Utilisation d'une composition de cire selon une ou plusieurs des revendications 1 à 7, pour la préparation de produits de micronisation de cires, seuls ou conjointement avec d'autres cires pouvant être broyées et utilisation de ces produits de micronisation dans des peintures.

12. Utilisation d'une composition de cire selon une ou plusieurs des revendications 1 à 7, pour la préparation de dispersions aqueuses.
